(19)

Europäisches Patentamt

European Patent Office

Office européen des brevets

(11) **EP 4 656 872 A1**

(12) **EUROPEAN PATENT APPLICATION**

(43) Date of publication:
**03.12.2025 Bulletin 2025/49**

(21) Application number: **24178541.9**

(22) Date of filing: **28.05.2024**

(51) International Patent Classification (IPC):
**F03D 1/06** (2006.01)

(52) Cooperative Patent Classification (CPC):
**F03D 1/0675**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Nederlandse Organisatie voor toegepast-natuurwetenschappelijk Onderzoek TNO**
**2595 DA 's-Gravenhage (NL)**

(72) Inventor: **The designation of the inventor has not yet been filed**

(74) Representative: **Nederlandsch Octrooibureau**
**P.O. Box 29720**
**2502 LS The Hague (NL)**

(54) **WIND TURBINE WITH HIGH TIP MASS AND TENSIONING MEMBER**

(57) A rotor arm for use in a wind turbine, the rotor arm having a hub end and a tip end, a mass member being provided near the tip end having a weight of between 10% and 100%, preferably between 20% and 50% of the weight of the rotor arm, the mass member being connected to the hub end of the blade or to another mass member of another rotor arm of the wind turbine.

Fig. 7

## Description

## TECHNICAL FIELD

The invention relates to a wind turbine comprising at least one blade having a hub end and a tip end. The invention also relates to a blade for use in such a wind turbine.

## BACKGROUND OF THE PRESENT DISCLOSURE

Wind turbine blade design is a well-established field. The large majority of blade designs use a load carrying beam with spar caps on the pressure and on the suction side, the spar caps connected with one or more shear webs. The beam and shear webs are covered with a thin shell, both made from glass/carbon fiber composite material with the shape of an air foil.

Upscaling has been an important driver for cost reduction of wind energy. However, blades are getting heavier (mass scales with more than length squared), while turbine power scales with the length squared.

A strong increase of wind energy deployment is foreseen in the coming years. To avoid the large number of rotor blades that are installed ending up as waste or downcycled products, a circular design and manufacturing approach for wind turbine blades needs to be developed.

The actual problem for wind turbine blade design is that these are heavily loaded, both by stochastic wind loads and cyclic gravity loads. Due to the long lifetime needed for a cost-effective wind turbine, the amount of load cycles a wind turbine blade faces is very large. To keep the blade strong and as light as possible, high-quality materials are used, such as glass and carbon fiber composites, but these are expensive and difficult to reuse/recycle.

Conventional blade design relies on a single ended clamped beam structure to transfer the loads to the hub and below. The high loading is countered by applying high quality materials for the blade structure, that combine low density and high strength. However, these materials are expensive and difficult to reuse/recycle and with further growing wind turbine size the blades will become ever heavier (mass scales with more than length squared).

It is an object of the invention to provide a wind turbine with wind turbine blades that are of relatively light weight, which have a simple construction and that can be recycled relatively easily.

## SUMMARY OF THE PRESENT DISCLOSURE

Hereto a rotor arm for use in a wind turbine, the rotor arm having a hub end and a tip end, a mass member being provided near the tip end having a weight of between 10% and 100%, preferably between 20% and 50% of the weight of the rotor arm, the mass member being connected to the hub end of the blade or to another weight member of another rotor arm of the wind turbine.

By providing the rotor arm with such a mass member, tensioning forces (directed from hub-end to tip-end) are used for substituting mechanical stiffness, enabling low-stiffness rotor arm-designs that ultimately result in low-weight rotor-arms that are still able to exert mechanical torque on a shaft during operation.

This provides light weight rotor arms of relatively simple construction and not subject to bending moments. The low structural requirements of the rotor arm allow a construction in which minimal or no composite material is used. In this way, the rotor arm can be easily manufactured and recycled after decommissioning.

The weight of the mass member may be a function of the weight of the rotor-arm assembly, including the weight of the mass-element.

US 10,550,823 discloses wind turbine blades in which balance boxes are placed onto blade tip segment and root segment. Within each balance box, a predetermined mass, for instance a mixture of sand and resin, is placed in order to adjust the static moment of the respective segment. The masses are carried by the shell and are not connected to the central structure to exert a centripetal force on the weights.

The rotor arm may have a length between 20 meters to 150 meters, preferably between 20 meters to 60 meters. This is a suitable size for generating power using the rotor arm in a wind turbine.

The mass member may be connected via an elongated tension member such that, during operation, at least 50% of a centripetal force of the rotor arm is exerted on the mass member. This allows to use low-weight rotor-arms that are still able to exert mechanical torque on a shaft of a wind turbine during operation.

The mass member may be connected via a load carrying shell. This provides an efficient connection of the weight member allowing for centripetal force of the rotor arm to be transferred and exerted on the mass member during operation of the wind turbine.

The mass member may be connected via a combination of a load carrying shell and an elongated tension member comprising a rod or a cable. This alternative connection of the mass member also provides efficient transfer of centripetal force of the rotor arm to the mass member during operation of the wind turbine. It also provides a light and easy to manufacture connection.

The mass member may comprise a reservoir for containing a flowable material, a duct extending from the reservoir to the hub end of the rotor arm for filling the reservoir with a flowable material. In this way, the mass member can have variable mass. The mass of the mass member can be changed by filling or emptying the reservoir, thereby providing a more versatile rotor arm that can be configured depending on the needs and situation of the wind turbine. For instance, when the wind is stronger, the reservoir may contain more flowable material and vice versa.

The reservoir may comprise a closable opening which can open to release the flowable material from the reservoir. This allows for easily changing the weight of the weight member trough the closable opening. The reservoir in the mass member can be filled or emptied via the opening in the reservoir. The opening and closing of the closable opening may be controlled, i.e., by hand or by automation.

The rotor arm may comprise interspaced frame parts fixed to the tension member along its length and an outer shell supported on the frame parts. In this way, the tension member can be used for mounting additional parts of the rotor arm.

The mass member may be connected to the tension member via a release mechanism. This provides that, in case of emergency, the weight member can be separated using a release mechanism located between the weight member and the tension member.

At least the mass member may be displaceable relative to the hub for moving the mass member between an operative position at a distance from the hub and a standstill position that may be situated relatively close to the hub. This allows, for instance, that, when starting the wind turbine system, the weight member can be moved toward or away from the hub.

The rotor arm may extend at an angle during operation of between 5 and 35 degrees downwind from the rotor plane perpendicular to the shaft, preferably between 15 and 25 degrees, most preferably about 20 degrees.

The rotor arm may comprise a blade. This allows a rotor arm that might have light weight and of a relatively simple construction and that may not be subject to bending moments. The low structural requirements of the blade allow a construction in which no composite material may be used. In this way, the blade can be easily manufactured and recycled after decommissioning.

The one or more rotor arms may be arranged in a downwind position during operation with respect to the wind turbine. This is a suitable arrangement that allows sufficient clearance of the blades from the mast.

The wind turbine may comprise a mast with an attachment member situated near a lower part of the mast, for connecting to the rotor arm. This may increase safety. For instance, when not in operation, movement of the rotor arm may be restricted, both radially as well as axially (i.e. down-wind), by connecting the rotor arm to the mast using the attachment member. The attachment member may be, for instance, a hook installed on the mast and arranged to fast around the rotor arm. However, any other suitable attachment member may be used.

The wind turbine may comprise a mechanism to change a pitch of the rotor arm or of a part of the rotor arm and/or comprising a controllable element on the rotor arm to change an aerodynamic lift of the rotor arm. In this way, a control system may adjust the loading on the blade and with that the power production of the wind turbine.

The person skilled in the art will understand that the features described above may be combined in any way deemed useful.

## BRIEF DESCRIPTION OF THE DRAWINGS

The present disclosure will now be described in further detail with reference to the drawings that shows embodiments of the present disclosure:

FIG. 1 is a perspective view of a wind turbine comprising a rotor arm according to an embodiment of the invention.

FIG. 2 is a schematic view of the rotor arm according to an embodiment of the invention.

FIG. 3 is a graphic showing power generated as a function of a length L of the rotor arm of FIG. 2.

FIG. 4 is a graphic showing an example of weight of the mass member as a function of the length R of the rotor arm of FIG. 2.

FIG. 5 is a schematic view of the rotor arm according to an embodiment of the invention.

FIG. 6 is a perspective view of a blade according to an embodiment of the invention.

FIG. 7 is a perspective view of a wind turbine comprising two rotor arms according to an embodiment of the invention.

FIG. 8 is a perspective view of a wind turbine comprising a rotor arm according to an embodiment of the invention.

## DETAILED DESCRIPTION

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present invention, and similarly, a second element may be referred to as a first element.

The terms used in describing the various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

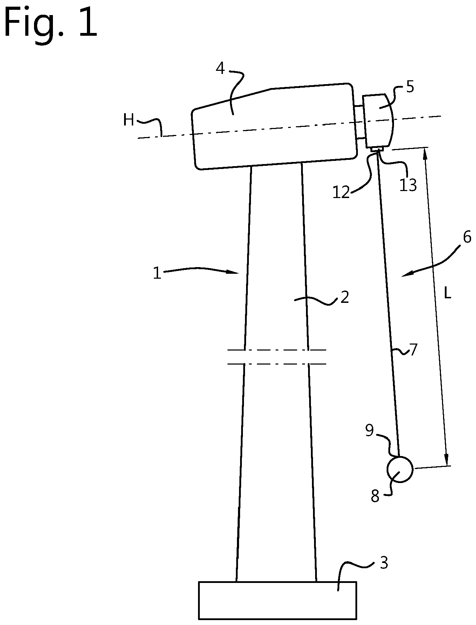

FIG. 1 is a perspective view of a wind turbine comprising a rotor arm according to an embodiment of the invention.

The wind turbine 1 of FIG. 1 comprises a base 3 connected to a mast 2 arranged to extend vertically when the wind turbine is mounted on a location. The wind turbine 1 also comprises a shaft 4 mounted on an end of the mast 2 located opposite to the base 3. The wind turbine 1 comprises a rotor 5 connected to the shaft 4 that can rotate around an axis H. The shaft 4 extends above the mast 2 in a direction parallel to the axis H.

The wind turbine 1 comprises a rotor arm 6. The rotor arm 6 comprises a hub end 12, a tip end 9 and a mass member 8 provided at the tip end 9. The mass member 8 may be connected to the tip end by any kind of suitable attachment such as a bolted, threaded or form-fitted connections.

The rotor arm 6 comprises further a tensioning member 7 connecting the mass member 8 to the hub end 12 of the rotor arm 6. The tensioning member 7 of the wind turbine 1 comprises a cable. The hub end 12 of the cable 7 is connected to the rotor 5 through the connection member 13. The wind turbine 1 comprises one rotor arm 6.

The mass member 8 is shown comprising a ball shape in the figures for the sake of simplicity. However, the mass member 8 may comprise any other shape such as an airfoil shaped, which may maximize the use of space for mass-providing material in the tip part. The tip end 9 of the cable 7 is connected to the outside surface of the mass member 8. The mass member 8 may comprise any other suitable shape than the mentioned ones.

The cable 7 comprises a length L extending from the hub end to the tip end. The wind turbine 1 could comprise any number of rotor arms 6. When comprising more than one rotor arm 6, the mass members of two different rotor arms may be connected to each other instead of to the connection member 13.

The mass member 8 may have a weight of between 10% and 100%, preferably between 20% and 50% of the weight of the rotor arm 6.

During operation of the wind turbine 1, the rotor arm 6 comprising the cable 7 and the weight member 8 allows that tensioning forces directed from the hub end 12 to the tip end 9 exert mechanical torque on the shaft 4.

The rotor arm 7 can be of light weight and of relatively simple construction and not subject to bending moments. The low structural requirements of the rotor arm 6 allow a construction in which no composite material is used. In this way, the rotor arm 6 can be easily manufactured and recycled after decommissioning, thereby reducing costs. For instance, the cable 7 may be made of artificial fiber such as carbon fiber, steel, aramid, etc. and the mass member may comprise steel, concrete, sand, water, etc.

The weight of the mass member 8 may be a function of the weight of the rotor arm 6, including the weight of the mass member 8. The rotor arm 6 may have a length between 20 meters to 150 meters, preferably between 20 meters to 60 meters.

The rotor arm 6 may extend at an angle during operation of between 5 and 35 degrees downwind from the rotor plane perpendicular to the shaft axis H, preferably between 15 and 25 degrees, most preferably about 20 degrees.

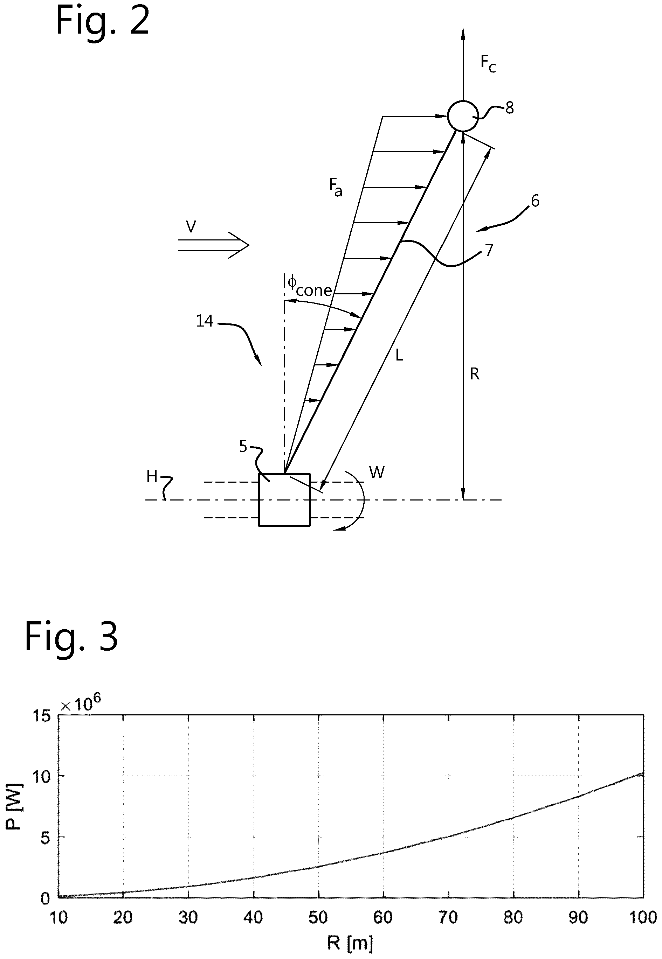

FIG. 2 is a schematic view of the rotor arm 6 in operation when the wind blows from left to right with a speed V thereby exerting a force $F_a$ on the cable 7 that is countered by a centrifugal force $F_c$ exerted on the mass member 8. The working principle of the rotor arm 6 having a tensioning member 7 and a mass member 8 will be explained in relation to FIG. 2.

The centrifugal force Fc at a given moment depends on the mass m of the mass member 8, the length R of a line starting at the tip end 9 and going in a perpendicular direction to a middle axis H of the rotor 5, and a rotation speed W of the rotor 5, as given by the below equation:

$$F_c = m*R*W^2$$

FIG. 3 is a graphic showing power generated as a function of the length R. The vertical axis of FIG. 3 represents the power generated in Watts and the horizontal axis represents the length R in meters.

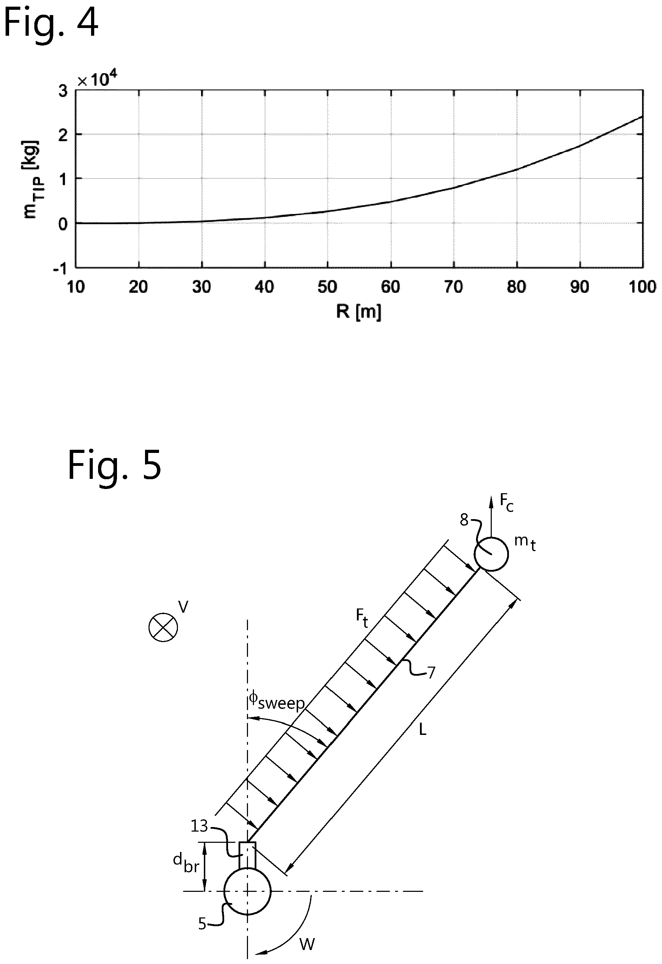

FIG. 4 is a graphic showing an example of a mass m of the mass member 8 as a function of the length R. The vertical axis of FIG. 4 represents the mass m in Kilograms (Kg) and the horizontal axis represents the length R in meters.

FIG. 5 is a schematic view of the rotor arm according to an embodiment of the invention. FIG. 5 represents another view of FIG. 2. The connection member 13 extends a distance $d_{br}$ from the axis H of the rotor 5.

Connecting the blade at $d_{br}$ distance perpendicular from the center of the rotor 5 allows conversion of force into torque. This also alleviates bending moments in direction of rotation as well.

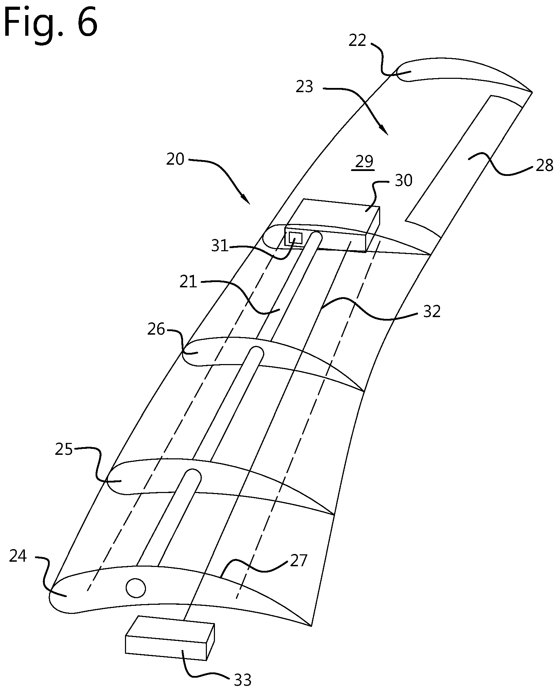

FIG. 6 is a perspective view of a blade 20 according to an embodiment of the invention. The blade 20 comprises interspaced frame parts 24, 25, 26 fixed to the tension member 21 along its length going through the hub end 27 until the tip end 22, and an outer shell 29 supported on the frame parts. The blade 20 comprises near the tip end 22 a moveable flap 28 that can be adjusted to control the aerodynamic loading.

The blade 20 comprises further a mass member 30 connected via the tension member 21 which comprises a rod. A light weight skin (outer shell 29) covers the frame of the blade 20. Optionally the light weight skin could be replaced with a load carrying shell.

The mass member 30 comprises a reservoir for containing a flowable material and a duct 32 extending from the reservoir to the hub end of the tension member 21 for filling the reservoir with a flowable material. The opening 31 may be opened to release the flowable material from the reservoir. In this way, the mass of the mass member 30 can be adjusted.

The blade 20 further comprises a further reservoir 33 located on the hub and connected to the reservoir 30 at the tip with duct 32.

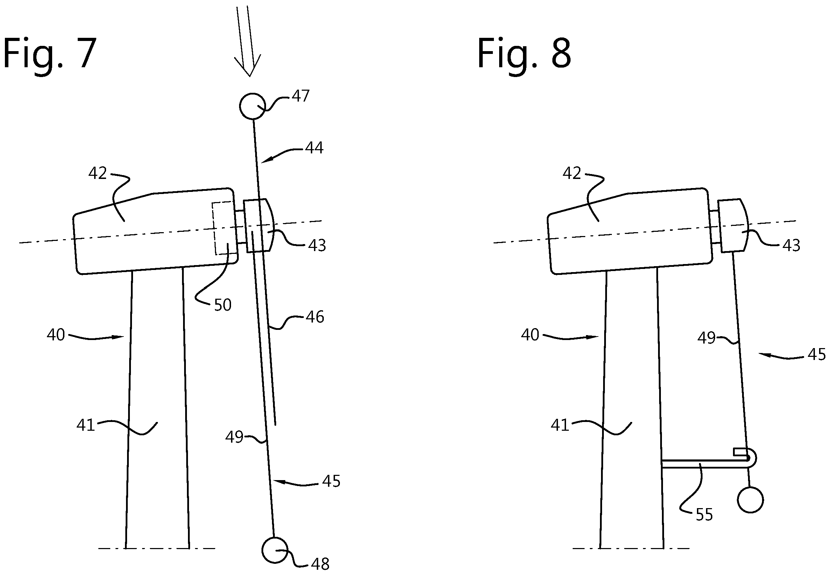

FIG. 7 is a perspective view of a wind turbine comprising two rotor arms according to an embodiment of the invention.

The wind turbine 40 of FIG. 7 comprises a mast 41, a shaft 42, a rotor 43 a first rotor arm 44 and a second rotor arm 45. The first rotor arm 44 comprises a first cable 46 and a first mass member 47 connected to the first cable 46. The second rotor arm 45 comprises a second cable 49 and a second mass member 48 connected to the second cable 49.

At least the first mass member 47 and/or the second mass member 48 are displaceable relative to the hub for moving the first/second mass member between an operative position at a distance from the hub and a standstill position that may be situated relatively close to the hub. This allows load reducing in standstill due to reduced frontal area.

FIG. 7 shows the wind turbine 40 with the first rotor arm 44 displaced while the second rotor arm 45 is not displaced such that the first mass member 47 is closer to the hub than the second mass member 48.

FIG. 8 is a perspective view of a wind turbine comprising a rotor arm according to an embodiment of the invention.

The wind turbine 40 of FIG. 8 comprises a mast 41 with an attachment member 55 situated near a lower part of the mast 41. The attachment member 55 is connected to the mast 41 extending outwardly in a direction perpendicular to a longitudinal direction of the mast 41.

The attachment member 55 comprises a hook at its end for connecting to the cable 49 of the rotor arm 45. In this way, the rotor arm 45 can be locked by the attachment member 55 when not in operation to increase safety and avoid unwanted movement of the rotor arm 45.

While the present disclosure has been described with reference to exemplary embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure is not limited to the particular embodiments disclosed, but that the present disclosure will include all embodiments falling within the scope of the appended claims.

**Claims**

1. A rotor arm for use in a wind turbine, the rotor arm having a hub end and a tip end, a mass member being provided near the tip end having a weight of between 10% and 100%, preferably between 20% and 50% of the weight of the rotor arm, the mass member being connected to the hub end of the rotor arm or to another mass member of another rotor arm of the wind turbine.

2. The rotor arm according to claim 1, having a length between 20 meters to 150 meters, preferably between 20 meters to 60 meters.

3. The rotor arm according to any of the preceding claims, wherein the mass member is connected via an elongated tension member such that, during operation, at least 50% of a centripetal force of the rotor arm is exerted on the mass member.

4. The rotor arm according to any of claims 1, 2 and 3, wherein the mass member is connected via a load carrying shell.

5. The rotor arm according to any of claims 1, 2 and 3, wherein the mass member is connected via a combination of a load carrying shell and an elongated tension member comprising a rod or a cable.

6. The rotor arm according to any of the preceding claims, the mass member comprising a reservoir for containing a flowable material, a duct extending from the reservoir to the hub end of the rotor arm for filling the reservoir with a flowable material.

7. The rotor arm according to claim 6, wherein the reservoir comprises a closable opening which can open to release the flowable material from the reservoir.

8. The rotor arm according to any of the preceding claims, comprising interspaced frame parts fixed to the tension member along its length and an outer shell supported on the frame parts.

9. The rotor arm according to any of the preceding claims, wherein the mass member is connected to the tension member via a release mechanism.

10. The rotor arm according to any of the preceding claims, wherein at least the mass member is displaceable relative to the hub for moving the mass member between an operative position at a distance from the hub and a standstill position that is situated relatively close to the hub.

11. The rotor arm according to any of the preceding claims, wherein the rotor arm extends at an angle during operation of between 5 and 35 degrees downwind from a rotor plane perpendicular to the shaft, preferably between 15 and 25 degrees, most preferably about 20 degrees.

12. The rotor arm according to any of the preceding claims, comprising a blade.

13. A wind turbine comprising one or more rotor arms according to any of the preceding claims, wherein the one or more rotor arms are arranged in a downwind position during operation with respect to the wind turbine.

14. The wind turbine according to claim 13, comprising a mast with an attachment member situated near a lower part of the mast, for connecting to the rotor arm.

15. The wind turbine according to any of claims 13-14, comprising a mechanism to change a pitch of the rotor arm or of a part of the rotor arm and/or comprising a controllable element on the rotor arm to change an aerodynamic lift of the rotor arm.

# Fig. 1

## Fig. 2

## Fig. 3

# Fig. 4

# Fig. 5

# Fig. 6

Fig. 8

Fig. 7

Europäisches
Patentamt
European
Patent Office
Office européen
des brevets

## EUROPEAN SEARCH REPORT

**Application Number**

EP 24 17 8541

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 44 28 730 A1 (BIOTECH GMBH ZWICKAU PLANUNGS [DE]) 22 February 1996 (1996-02-22) * column 4, line 48 - column 5, line 15; figures 1-3 * * column 5, line 45 - column 6, line 5 * * column 6, line 30 - line 68 * * column 8, line 33 - line 63 * | 1-3,6-8, 10-15 | INV. F03D1/06 |
| X | KR 2023 0156372 A (VESTAS WIND SYSTEMS A [DK]) 14 November 2023 (2023-11-14) * paragraph [0022] - paragraph [0023]; figures 1,2,3,8-12 * * paragraph [0032] * * paragraph [0061] - paragraph [0063] * | 1,2,4, 11-13,15 | |
| X | US 2019/085818 A1 (NEUMANN ULRICH WERNER [US] ET AL) 21 March 2019 (2019-03-21) * paragraph [0028] - paragraph [0031]; figures 4-16 * | 1,2,6,7, 10 | |
| X | DE 10 2009 011603 A1 (WUERTHELE KLAUS [DE]) 9 September 2010 (2010-09-09) * paragraph [0005] - paragraph [0018]; figures 2-11 * | 1,2,6,7, 9,10 | TECHNICAL FIELDS SEARCHED (IPC) F03D |
| X | WO 02/073031 A1 (KLEMAR BENNY [DK]) 19 September 2002 (2002-09-19) * page 2, line 6 - page 5, line 5 * * page 6, line 6 - page 8, line 10; figures 1-3 * | 1,4,6,7, 10-15 | |

The present search report has been drawn up for all claims

| Place of search | Date of completion of the search | Examiner |
|---|---|---|
| The Hague | 24 October 2024 | Herdemann, Claire |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

                                                      
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 8541

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2024

| Patent document cited in search report | | Publication date | Patent family member(s) | | Publication date |
|---|---|---|---|---|---|
| DE 4428730 | A1 | 22-02-1996 | NONE | | |
| KR 20230156372 | A | 14-11-2023 | AU | 2022237482 A1 | 05-10-2023 |
| | | | CN | 117098912 A | 21-11-2023 |
| | | | EP | 4308813 A1 | 24-01-2024 |
| | | | JP | 2024510025 A | 05-03-2024 |
| | | | KR | 20230156372 A | 14-11-2023 |
| | | | US | 2024159212 A1 | 16-05-2024 |
| | | | WO | 2022194333 A1 | 22-09-2022 |
| US 2019085818 | A1 | 21-03-2019 | DK | 3456957 T3 | 28-08-2023 |
| | | | EP | 3456957 A1 | 20-03-2019 |
| | | | ES | 2952861 T3 | 06-11-2023 |
| | | | US | 2019085818 A1 | 21-03-2019 |
| DE 102009011603 | A1 | 09-09-2010 | NONE | | |
| WO 02073031 | A1 | 19-09-2002 | NONE | | |

EPO FORM P0459

For more details about this annex : see Official Journal of the European Patent Office, No. 12/82

**EP 4 656 872 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10550823 B